# EUROPEAN PATENT APPLICATION

(11) **EP 2 287 458 A2**
(43) Date of publication of application: **23.02.2011**
(21) Application number: 10007308.9
(22) Date of filing: 15.07.2010
(51) Int. Cl.: F02M 21/02

(54) **Method of detecting at least one malfunctioning high-pressure gas tank**

(30) Priority: 21.08.2009 GB 0914675
(71) Applicant: GM Global Technology Operations, Inc., Detroit, MI 48265-3000 (US)
(72) Inventor: Jauss, Andreas, 56479 Westernohe (DE); Sarikaya, Ayhan, 67578 Gimbsheim (DE)
(74) Representative: Spitzfaden, Ralf

(57) **Abstract**

A method of detecting a malfunctioning high-pressure gas tank (4) comprised within a vehicle (1), which method comprises retrieving (202, 204) first and second system gas pressure values (p1, p2) at first and second points of time (t1, t2); retrieving (206) data related to temperature and pressure of gas supplied to an engine (12) between the first and second points of time; determining (208) an expected gas pressure drop (D_{expected}) within the system (2) based on the data; determining (210) an actual system gas pressure drop (D_{actual}) by comparing the first and second pressure values (p1, p2); determining (212) a pressure drop delta (Δ) by comparing the actual pressure drop (D_{actual}) and the expected pressure drop (D_{expected}); and triggering an indication if the delta (Δ) exceeds a predetermined threshold (Δ_{threshold}), thereby providing a warning of occurrence of at least one malfunctioning tank (4).

With the present invention, a potential rupturing of the tank (4) or uncontrolled release of gaseous fuel through a manual shut off valve (9) resulting from overpressure in a tank (4), may be avoided.

## Description

### Technical Field

The present invention relates to a method of detecting at least one malfunctioning high-pressure gas tank of a high-pressure gas tank system comprised within a vehicle.

The present invention also relates to a control unit and computer programs for such a detection.

### Background Art

Natural gas, which is mainly composed of methane (CH₄), is a fossil fuel substitute representing a cleaner and safer alternative to other vehicle fuels such as gasoline (petrol) and diesel. The energy efficiency is generally equal to that of gasoline engines, and in combustion, the gas is burned in the engine in fundamentally the same manner as for traditional gasoline vehicles. Natural gas is commonly used in traditional gasoline vehicles, which are adapted to support bi-fuel (gasoline / natural gas) and hence run indifferently on either gasoline or natural gas. Vehicles adapted for CNG are becoming increasingly popular due to factors such as rising gasoline prices.

Most vehicles adapted for combustion of natural gas operate using compressed natural gas (CNG), such that the fuel takes up less space. CNG is derived by compressing natural gas to for instance less than 1% of its volume at standard atmospheric pressure. At a fuelling station, the gas is compressed to approximately 200-220 bar (2900-3200 pounds per square inch (psi)) before being pumped into high-pressure, preferably tube-shaped cylinders, which for instance are attached to the rear, top or undercarriage of the vehicle.

A CNG cylinder commonly comprises an electromagnetic non-return valve controlled by an electric voltage, which valve allows gas to flow in one direction from the cylinder to the fuel injectors and the engine of the vehicle. Should the electromagnetic non-return valve malfunction, and the opening-closing actuation of the valve thereby not function as intended, the CNG will not be properly supplied. On a vehicle comprising a plurality of high-pressure gas tanks, such a malfunctioning tank, "blind tank", might go unnoticed. Even if the driver of the vehicle comprehends the shortened driving range of the vehicle resulting from the blind tank, he or she might even choose to ignore the situation.

The gas within the blind high-pressure tank is with the malfunctioning non-return valve "trapped", and may due to for instance refuelling of the blind tank, and/or varying fuelling pressure, and/or increased ambient temperature, reach a gas pressure level exceeding a maximum level of what the high-pressure tank is designed for. In order to avoid a violent rupturing of the blind overpressured tank, an external manual shut off valve is preferably provided to the tank, which is triggered should the maximum limit be reached. Thereby, the entire tank content of the blind tank is emptied, without chemical reaction of the gas fuel, to the outside of the car.

US 6,041,762, for instance, discloses a natural gas fuel supply for a vehicle, comprising a pressure release device functioning as such an external manual shut off valve. Although this pressure release device allows release of the natural gas, and potential rupture of the over pressurized tank thereby is avoided, such an unannounced release to the outside of the vehicle is not without risks. The natural gas is after all a combustible fuel, and a release, which for instance might be for instance are attached to the rear, top or undercarriage of the vehicle.

A CNG cylinder commonly comprises an electromagnetic non-return valve controlled by an electric voltage, which valve allows gas to flow in one direction from the cylinder to the fuel injectors and the engine of the vehicle. Should the electromagnetic non-return valve malfunction, and the opening-closing actuation of the valve thereby not function as intended, the CNG will not be properly supplied. On a vehicle comprising a plurality of high-pressure gas tanks, such a malfunctioning tank, "blind tank", might go unnoticed. Even if the driver of the vehicle comprehends the shortened driving range of the vehicle resulting from the blind tank, he or she might even choose to ignore the situation.

The gas within the blind high-pressure tank is with the malfunctioning non-return valve "trapped", and may due to for instance refuelling of the blind tank, and/or varying fuelling pressure, and/or increased ambient temperature, reach a gas pressure level exceeding a maximum level of what the high-pressure tank is designed for. In order to avoid a violent rupturing of the blind overpressured tank, an external manual shut off valve is preferably provided to the tank, which is triggered should the maximum limit be reached. Thereby, the entire tank content of the blind tank is emptied, without chemical reaction of the gas fuel, to the outside of the car.

US 6,041,762, for instance, discloses a natural gas fuel supply for a vehicle, comprising a pressure release device functioning as such an external manual shut off valve. Although this pressure release device allows release of the natural gas, and potential rupture of the over pressurized tank thereby is avoided, such an unannounced release to the outside of the vehicle is not without risks. The natural gas is after all a combustible fuel, and a release, which for instance might be perceptible due to an odour additive comprised in the gas, is likely to alert the fire brigade and/or being dangerous if vented in hazardous environments.

### General disclosure of the Invention

It is therefore an object of the present invention to provide a solution in which the above-related drawbacks are at least partly eliminated.

According to a first aspect of the invention, this and other objects are achieved by a method of detecting at least one malfunctioning high-pressure gas tank of a high-pressure gas tank system comprised within a vehicle, which method comprises retrieving a first system gas pressure value reflecting pressure within the system at a first point of time and retrieving a second system gas pressure value reflecting pressure within the system at a second point of time, which second point of time occurs a predetermined period of time after the first point of time. The method further comprises retrieving data related to temperature and pressure of gas supplied to an engine of the vehicle during the predetermined period of time; determining an expected gas pressure drop within the system for the predetermined period, based on the data; determining an actual system gas pressure drop by comparing the first and second pressure values; determining a pressure drop delta by comparing the actual pressure drop and the expected pressure drop; and triggering an indication if the delta exceeds a predetermined threshold, thereby providing a warning of occurrence of at least one malfunctioning tank.

Consequently, by introducing a solution for detection of at least one malfunctioning high-pressure gas tank of a high-pressure gas tank system, the present invention thus overcomes the drawback of a potential rupturing of a blind tank, or triggering of a manual shut off valve of the blind tank during unexpected and perhaps hazardous conditions.

By gathering of gas pressure values within the gas tank system at different points of time, and comparison of the resulting actual pressure decrease to a corresponding expected pressure decrease based on a fuel consumption of an intact gas tank system, a delta may be derived, which if it exceeds a predetermined threshold reveals one or several malfunctioning tanks. By triggering an indication of such an occurrence, a driver of the vehicle is encouraged to bring the vehicle to a service shop for repair of the malfunctioning tank. Thereby, the e.g. blind tank may be repaired prior to a potential hazardous risk of rupturing of the tank or uncontrolled release of the overpressured gas through a manual shut off valve.

Any gas applicable for a high-pressure gas tank system is feasible within the scope, and may for instance comprise one or a combination of CNG (compressed natural gas), methane and hydrogen.

Triggering of an indication if the pressure drop delta exceeds the predetermined threshold, may comprise triggering setting of a DTC (diagnostic trouble code). By defining and assigning and, when applicable, setting such a fault code in for instance the control device and/or an engine ECU (electronic control unit), "the vehicle" is enabled to monitor the situation and e.g. a service technician at a service shop enabled to subsequently identify and remedy the malfunction. The DTC may be in accordance with standards based on OBD (On-Board Diagnostics) (OBD-I, OBD-II), which provides access to numerous data from ECU:s of the vehicle and offers a valuable source of information when troubleshooting problems inside the vehicle. The e.g. list of generic OBD-II DTC:s may thus for instance be enhanced with an additional proprietary DTC assigned for the occurrence of the pressure delta exceeding the predetermined threshold.

Alternatively and/or additionally, triggering of an indication if the pressure drop delta exceeds the predetermined threshold, may comprise triggering a visual and/or an acoustical alert. The visual alert may for instance be visualized through illumination of a warning lamp and/or a warning message on an information display of the vehicle. With such indications, a user of the car may easily comprehend the warning of one or several malfunctioning tanks, and hence be alerted to get the malfunctioning tank(s) repaired.

According to one embodiment, the first and/or second pressure values are based on measurements by a high-pressure sensor comprised in the high-pressure gas tank system. By arranging one or several sensors where considered appropriate within the system, preferably as close as possible to the gas tanks, adequate system gas pressure values may be derived there from.

In order to allow gaseous fuel to be delivered from a tank, the tank may comprise a check valve, e.g. a solenoid valve, enabling/disabling gas to flow to the engine. Thereby, control of the flow is provided, for instance by an electric voltage, enabling the valve to exhibit the mechanical function of a check valve in a non-votage state. There may be several reasons to why a tank might malfunction, one of them being a faulty such valve preventing the unidirectional flow of gaseous fuel from the tank, thereby bringing the tank to a blind state. One or several such blind tanks may however be detected in accordance with the solution of the present invention.

According to a second aspect, the invention likewise concerns a control unit for detecting at least one malfunctioning high-pressure gas tank of a high-pressure gas tank system comprised within a vehicle, which control unit is adapted to receive a first system gas pressure value reflecting pressure within the system at a first point of time; receive a second system gas pressure value reflecting pressure within the system at a second point of time, which second point of time occurs a predetermined period of time after the first point of time; and receive data related to temperature and pressure of gas supplied to an engine of the vehicle during the predetermined period of time. The control unit comprises means for determining an expected gas pressure drop within the system for the predetermined period, based on the data; means for determining an actual system gas pressure drop by comparing the first and second pressure values; means for determining a pressure drop delta by comparing the actual pressure drop and the expected pressure drop; and means for triggering an indication if the delta exceeds a predetermined threshold, thereby providing a warning of occurrence of at least one malfunctioning tank. With such a control unit, similar effects as described in the foregoing may be accomplished.

The invention likewise concerns a computer program for performing the steps of the method according to the first aspect, when the program is executed in a control unit of the vehicle. Furthermore, the invention likewise concerns a computer program for detecting at least one malfunctioning high-pressure gas tank, which program is comprised in a control unit according to the second aspect.

### Brief description of the drawings

These and other aspects of the present invention will now be described in more detail, with reference to the appended drawings showing currently preferred embodiments of the invention, in which:
Figures 1 illustrates a vehicle comprising a high-pressure gas tank system and a control unit for detecting at least one malfunctioning high-pressure gas tank in accordance with an exemplifying embodiment of the present invention.
Figure 2 illustrates exemplifying steps of the shown embodiment.
Figure 3 depicts an exemplifying diagram of system pressure decreasing over time.

### Detailed description of currently preferred embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

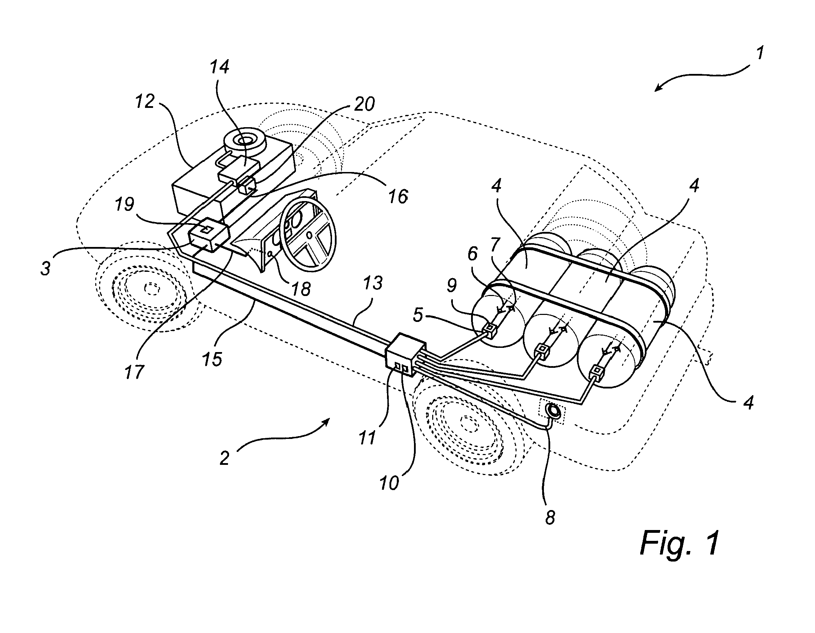

Figure 1 illustrates a vehicle 1 comprising a high-pressure gas tank system 2 and a control unit 3 for detecting at least one malfunctioning high-pressure gas tank 4 in accordance with an exemplifying embodiment of the present invention. The vehicle 1 in the illustration is a car, the invention is however not restricted thereto. Any vehicle suitable for utilization of gaseous fuel, such as for instance a truck or a bus, is likewise covered by the scope. The gaseous fuel may for instance be natural gas, preferably compressed (CNG). Prior to combustion, the pressure of the gas may be regulated to be reduced to a pressure suitable for an injection system of the vehicle 1, in a manner known in the art. The vehicle 1 may be adapted to run indifferently on either gaseous fuel or gasoline, i.e. bi-fuel, and the driver may select which fuel to burn by for instance flipping a switch on the dashboard (not shown). Thereby, gasoline may be used should the gaseous fuel run empty.

The high-pressure gas tank system 2 here comprises three tube-shaped cylinder tanks 4, arranged undercarriage of the vehicle 1. Note that any number of tanks 4 likewise is applicable, and that their shapes and the positions of the tanks 4 in relation to each other and to the vehicle 1 may vary. The tanks 4 may for instance be housed together in a size and shape resembling a conventional gasoline tank. The cylinders 4 may be made of for instance steel, aluminium, or plastic. Lightweight composite (fibre-wrapped thin metal "ISO 11439 CNG-3" / fibre-wrapped plastic "ISO 11439 CNG-4") cylinders are especially beneficial for vehicular use due to the significant weight reductions as compared with earlier generation steel and aluminium cylinders, and the subsequent decreased fuel consumption.

Each gas tank 4 may comprise a tank interface 5, enabling delivery of gaseous fuel to and from the tank 4. The tank interface 5 here comprises an electro magnetic solenoid valve 6, which valve 6 allows the gaseous fuel to flow only in a direction out of the cylinder 4, i.e. in a unidirectional flow. The electro magnetic solenoid valve 6 may as here be represented by an electromagnetic non-return valve controlled by an electric voltage (not shown), which solenoid in a non-voltage state has the mechanical function of a check valve. A control switch or an electromagnetic relay controlled by a control unit (not shown) can be utilized to activate and deactivate the solenoid valve 6 as desired. Other types of check valves 6 are naturally applicable. The tank interface 5 of Figure 1 furthermore comprises a refuel check valve 7, which permits a one-way flow of gas into the tank 4 when it is filled. For refuelling of the tanks 4, a refuel line 8 is illustrated in an exemplifying manner. Furthermore, the tank interface 5 here comprises a manual shut off valve 9 for pressure release, which allows safe release of gas from the tank 4 to the outside. A burst disc (not shown) may thereby be opened in case of reaching overpressure in the gas tank. The manual shut off valve 9 is known in the art as an additonal safety choice, in order to avoid any of the gas tanks 4 bursting. Note that the manual shut off valve 9 may be omitted in other embodiments.

In order to measure the gas pressure within the high-pressure gas tank system 2, the system 2 according to the illustrated embodiment comprises a high-pressure sensor 10. Here only one high-pressure sensor 10 is depicted, note however that a plurality of sensors 10 may be utilized if preferred or suitable. The high-pressure gas tank system 2 furthermore here comprises a temperature sensor 11, which enables the temperature of the gas supplied from the tanks 4 to be measured. Note that the shown sensors 10, 11 and their positions in the illustration are exemplifying, and that other dispositions and/or applicable means to monitor temperature and pressure likewise may be utilized. For detection of representative measurement values however, the sensor(s) 10, 11 may be positioned in the vicinity of or as close as possible to the gas tanks 4.

The embodiment furthermore comprises an engine 12, here an internal combustion engine. Note that other alternatives likewise are covered by the scope, for instance is a solution utilizing electrochemical conversion in fuel cells, representing an even cleaner energy option, likewise feasible. Gaseous fuel to the engine 12 is here supplied through exemplifying fuel line 13. As previously indicated, the pressure which is supplied from the gas tank 4 may need to be reduced to engine system pressure prior to reaching the engine 12. To this end, a pressure regulator (not shown) may be utilized, to stabilize the gas pressure before the gas reaches the engine, or rahter injectors 14. In conjunction with the engine 12 is here a fuel injector 14 disposed, which is capable of opening and closing many times per second and controls the amount of gas supplied to the engine 12. Sensors and computers (not shown) may be adapted to adjust a fuel-air mixture so that when a spark plug ignites the gas, it burns efficiently.

As depicted in Figure 1 and briefly suggested in the foregoing, the exemplifying embodiment comprises a control unit 3. Here the control unit 3 is a separate unit, note however that it likewise may be part of an ECU (electronic control unit) supporting as well other functionality not related to the present invention. In the latter case, the control unit 3 is preferably comprised in an engine ECU 20, which ECU is commonly utilized in prior art for control of the engine 12, designed in different shapes and manners and with varying functionality.

In order for the control unit 3 to receive signals carrying information with regards to temperature and pressure of the gas, a communication line 15 is here depicted between the control unit 3 and the high-pressure and temperature sensors 10, 11. Furthermore, a communication line 16 is depicted between the control unit 3 and the engine 12. Note that the latter communication line 16 may be omitted should the control unit 3 be comprised in e.g. the engine ECU 20. The control unit 3 is here, via a communication line 17, in communication with an information display positioned in front of the driver. The information display is adapted to notify the driver of for instance various vehicle status, and does in the shown embodiment support prompting of an indication 18 perceptible by the driver. The indication 18 is intended to convey a warning, and may for instance be applied as an warning text or, as here, a warning triangle, or a combination thereof.

It should be emphasized that communication for sake of clarity here is depicted to take place on communication lines 15-17 directly connected to parts from/to which the control unit 3 retrieves or supplies information. Note however that any part, for instance the sensors 10, 11, the indication 18 and the engine 12, may be connected to a common or respective arbitrary control unit, and that these parts may be in communication with each other via multiplex communication buses such as for instance CAN and LIN well known in the art. Information requested by the control unit 3 may consequently likewise be carried by signals, which are available to the control unit 3 from the bus(es).

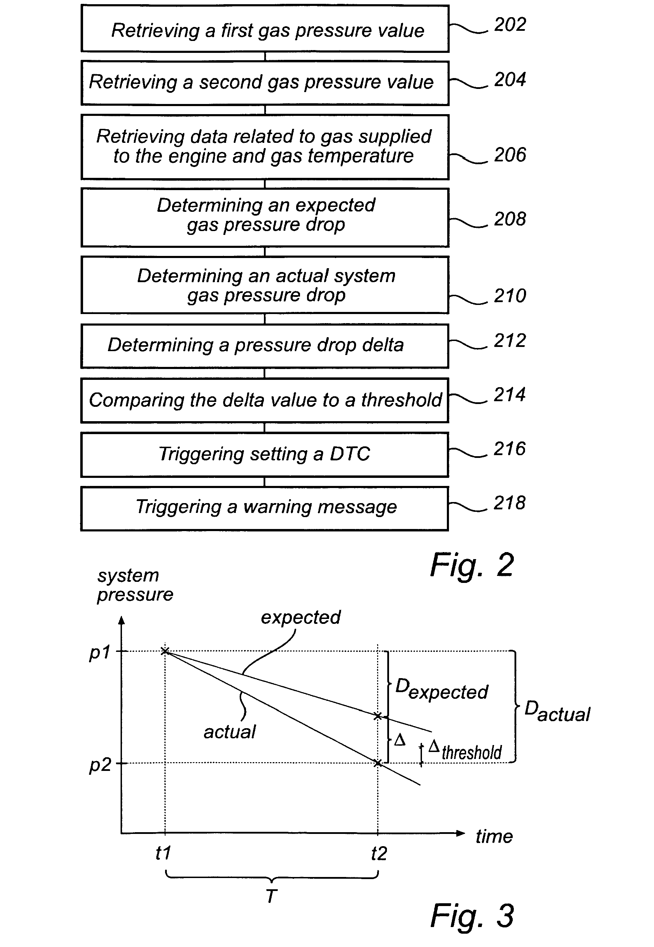

In order to support exemplifying functionality in accordance with the shown embodiment, the control unit 3 furthermore comprises purposeful means 19, such as for instance one or several computer program. Here only one purposeful means 19 have been depicted, note however that if preferred or suitable, different means, such as different computer programs, may be provided for support of different functionality. The functionality of the purposeful means 19 will now be described in conjunction with Figure 2, with support from the exemplifying diagram of system pressure decreasing over time in Figure 3.

Figure 2 illustrates exemplifying steps of the shown embodiment. It should be noted that the following steps may be performed simultaneously and/or in another order than suggested.

In use, the embodiment of the present invention functions to detect one or several malfunctioning gas tanks 4. To this end, the following steps are preferably performed continuously with a repetition frequency for instance defined by the designer.

In a first step 202, the exemplifying control unit 3 may, preferably with assistance of the computer program, retrieve a first system gas pressure value p1, which reflects pressure within the high-pressure gas tank system 2 at a first point of time t1. In a second step 204, the depicted control unit 3 may retrieve a second system gas pressure value p2, which reflects pressure within the high-pressure gas tank system 2 at a second point of time t2. Note that retrieval of the first and second pressure values p1, p2 not necessarily needs to take place at different points of time, but may likewise be received simultaneously. The respective points of time t1, t2 these first and second pressure values p1, p2 reflect must however differ, i.e. the second point of time t2 preferably occur a predetermined period of time T after the first point of time t1. The predetermined period of time T is arbitrary, and could be set in accordance with various conditions such as for instance based on time elapsed or distance the vehicle 1 has travelled, or a combination thereof. It should be noted that the scope of the invention not is restricted to retrieval of only two pressure values p1, p2; additional pressure values for even more thorough results may be utilized. Information with regards to system gas pressure may as previously insinuated be received from the high-pressure sensor 10 or via a signal from a control unit with which the sensor 10 is in communication.

In a next step 206, the control unit 3 according to the shown embodiment retrieves data related to gas temperature and amount of gaseous fuel supplied to the engine 12 during the specified period of time T.

Calculation of gas consumption during this specified period of time T may be performed based on for instance fuel injection pressure and gas temperature. These two variables can be used to calculate the gaseous fuel density. The volumetric flow of gaseous fuel can be derived from the amount of fuel supplied to the engine 12, which itself is determined by the amount of time the fuel injector 14 is alternately held open/closed. Pressure and temperature of the gaseous fuel are used to calculate the desired mass-flow.

Such data may be embedded in software and signals associated with a fuel injector pulse width, and may be retrievable by the control unit 3 from for instance the engine ECU 20 or a similar ECU holding such data. Alternatively or additionally, data with regards to gas temperature may as previously insinuated be received from the temperature sensor 11 or a control unit with which the sensor 11 is in communication. The information with regards to the fuel consumption may be retrieved and even accumulated continuously between the first to the second point of time t1, t2, or retrieved at a single occasion subsequent the second point of time t2. Necessary additional processing of the information may be performed in the control unit 3 by the computer program.

For an intact high-pressure gas system 1, an accumulation of the gas consumption during the predetermined period of time T represents a system dependent expected pressure drop, which may then be derived based on the gas consumption between the first and second points of time t1, t2. Subsequently, in step 208, an expected gas pressure drop D_{expected} may be determined by the control unit 3 of the exemplifying embodiment.

In step 210, an actual system gas pressure drop D_{actual} may be determined by comparing the first and second pressure values p1, p2. That is, by for instance subtracting the pressure value p2 valid for the second point of time t2 from the pressure value p1 valid for the first point of time t1, the amount of pressure with which the system 2 has decreased, D_{actualt} is derived.

Then, in step 212, a pressure drop delta Δ may be determined by comparing the actual pressure drop D_{actual} with the expected pressure drop D_{expected}. Thereby, the difference in pressure drop between the actual value and the expected value during the first and second points of time t1, t2 is reflected.

In step 214, the pressure drop delta Δ may be compared to a predetermined threshold value Δ_{threshold}. Such a threshold value Δ_{threshold} may for instance be a fixed value determined by the designer, or a parameter value changeable via e.g. software. The threshold Δ_{tnresnold} is preferably set high enough for the system 2 not to be too sensitive to minor discrepancies, meanwhile low enough to detect at least one malfunctioning tank 4. In the exemplifying embodiment, each tank 4 comprises, as depicted in Figure 1, an electromagnetic solenoid 6 for unidirectional flow of fuel from the tank 4 to the engine 12. Should such a solenoid 6 malfunction, the opening-closing actuation of the valve would not function properly and the gaseous fuel from the tank 4 would not be properly supplied to the engine 12. The corresponding tank 4 is thereby considered to be "blind", i.e. "invisible". In case of such a faulty check valve 6, the system gas pressure decreases more quickly than compared to an intact system 2 with properly functioning tanks 4. Hence, by comparing the actual pressure drop D_{actual} for the system 2 with the expected pressure drop D_{expected} of the system 2, and then comparing the resulting pressure drop delta Δ with the predetermined threshold Δ_{threshold}, a malfunctioning, here blind, tank 4 may be detected. Should more than one tank 4 be erroneous is naturally the pressure drop delta Δ even greater.

In step 216, if the resulting pressure drop delta Δ is determined to exceed the threshold Δ_{threshold}, an error code such as a DTC (diagnostic trouble code) may be triggered to be set in for instance the control unit 3 and/or engine ECU 20 to indicate the presence of at least one malfunctioning tank 4, likely caused by a faulty check valve 6. It should be noted, that by defining and assigning a DTC to represent a system gas pressure drop Δ exceeding the predetermined threshold Δ_{threshold}, "the vehicle" 1 is enabled to monitor the situation, and e.g. a service technician at a service shop enabled to subsequently identify and remedy the malfunction. The use of DTC:s is well known in the art, not the least concerning DTC:s in accordance with standards based on OBD (On-Board Diagnostics) (OBD-I, OBD-II etc.) referring to a vehicle's self-diagnostic and reporting capability, and the concept is not described in further detail herein.

Furthermore, in step 218, a warning message may be triggered in the event of the system gas pressure drop Δ exceeding the predetermined threshold Δ_{threshold}. In Figure 1, the warning message is an optical indication 18 presented to the driver in the form of for instance a warning triangle or a warning text. Note however, that for other embodiments, the warning may alternatively or additionally be acoustical.

In the event of a malfunctioning tank 4, the driver is preferably encouraged from the warning 18 to visit a service shop for repair of the malfunctioning tank 4, e.g. the faulty check valve 6. A service technician should be able to identify the one or plurality of malfunctioning tanks 4, repair the faulty e.g. check valve(s) 6, preferably clear the flagged DTC in case one was set, as well as clear the warning message had one been posted. With this procedure, a potential rupturing of the tank 4 or uncontrolled release of gaseous fuel through the manual shut off valve 9 resulting from overpressure in a tank 4, may be avoided.

The present inventive concept has been described above by way of example, and the person skilled in the art realizes that the present invention by no means is limited to the preferred embodiments described above.Additionally, it should be emphasized that the parts of the high-pressure gas tank system 2 described in the foregoing and the manner in which they are disposed in the illustration, are exemplifying. Additional and/or other parts may be present, whereas described parts even may be omitted. For instance, the refuel line 9 and the refuel check valve 7 are described only to assist in the general understanding of the gas tank system 2.

It should furthermore be emphasized that while the embodiment shown is disclosed as utilized in conjunction with a natural gas supply to an internal combustion engine 12, the invention could likewise be employed in conjunction with other fuel gases such as methane and hydrogen, and for other pressure based fuel tank systems utilizing for instance fuel cells.

## Claims

1. A method of detecting at least one malfunctioning high-pressure gas tank (4) of a high-pressure gas tank system (2) comprised within a vehicle (1), which method comprises:
retrieving (202) a first system gas pressure value (p1) reflecting pressure within said system (2) at a first point of time (t1);
retrieving (204) a second system gas pressure value (p2) reflecting pressure within said system (2) at a second point of time (t2), which second point of time (t2) occurs a predetermined period of time (T) after said first point of time (t1);
retrieving (206) data related to temperature and pressure of gas supplied to an engine (12) of said vehicle (1) during said predetermined period of time (T);
determining (208) an expected gas pressure drop (D_{expected}) within said system (2) for said predetermined period (T), based on said data;
determining (210) an actual system gas pressure drop (D_{actual}) by comparing said first and second pressure values (p1, p2);
determining (212) a pressure drop delta (Δ) by comparing said actual pressure drop (D_{actual}) and said expected pressure drop (D_{expected}); and
triggering an indication if said delta (Δ) exceeds a predetermined threshold (Δ_{threshold}), thereby providing a warning of occurrence of at least one malfunctioning tank (4).

2. The method according to claim 1, wherein said step of triggering an indication comprises:
triggering (216) setting of a DTC (diagnostic trouble code) if said delta (Δ) exceeds said predetermined threshold (Δ_{threshold}).

3. The method according to claim 1 or 2, wherein said DTC is in accordance with standards based on OBD (On-Board Diagnostics).

4. The method according to any one of the preceding claims, wherein said step of triggering an indication comprises:
triggering (210) a visual and/or an acoustical alert.

5. The method according to claim 4, wherein said step of triggering (210) a visual alert comprises:
triggering a warning lamp and/or a warning message (18) on an information display of said vehicle (1).

6. The method according to any one of the preceding claims, wherein said first and/or second pressure values (p1, p2) are based on measurements by a high-pressure sensor (10) comprised in said system (2).

7. The method according to any one of the preceding claims, wherein gas in said system (2) comprises one or a combination of CNG (compressed natural gas), methane and hydrogen.

8. The method according to any one of the preceding claims, wherein a tank (4) comprises a solenoid valve (6) enabling/disabling gas to flow to said engine (12).

9. A control unit (3) for detecting at least one malfunctioning high-pressure gas tank (4) of a high-pressure gas tank system (2) comprised within a vehicle (1), which control unit (3) is adapted to:
receive (202) a first system gas pressure value (p1) reflecting pressure within said system (2) at a first point of time (t1);
receive (204) a second system gas pressure value (p2) reflecting pressure within said system (2) at a second point of time (t2), which second point of time (t2) occurs a predetermined period of time (T) after said first point of time (t1); and
receive (206) data related to temperature and pressure of gas supplied to an engine (12) of said vehicle (1) during said predetermined period of time (T);
said control unit (3) comprising:
means for determining (208) an expected gas pressure drop (_{Dexpected}) within said system (2) for said predetermined period (T), based on said data;
means for determining (210) an actual system gas pressure drop (D_{actual}) by comparing said first and second pressure values (p1, p2);
means for determining (212) a pressure drop delta (Δ) by comparing said actual pressure drop (D_{actual}) and said expected pressure drop (D_{expected}); and
means for triggering an indication if said delta (Δ) exceeds a predetermined threshold (Δ_{threshold}), thereby providing a warning of occurrence of at least one malfunctioning tank (4).

10. The control unit (3) according to claim 9, wherein said system (2) comprises at least one high-pressure sensor (10) measuring said first and/or second pressure values (p1, p2).

11. The control unit according to claim 9 or 10, wherein gas in said system (2) comprises one or a combination of CNG (compressed natural gas), methane and hydrogen.

12. The control unit (3) according to any one of claims 9 to 11, wherein a tank (4) comprises a solenoid valve (6) enabling/disabling gas to flow to said engine (12).

13. A computer program for performing the steps of claim 1 when the program is executed in a control unit (3, 20) of said vehicle (3).

14. A computer program for detecting at least one malfunctioning high-pressure gas tank (4), which program is comprised in a control unit (3) according to claim 9.
